# NEW EUROPEAN PATENT SPECIFICATION

(11) **EP 3 239 269 B2**
(45) Date of publication and mention of the opposition decision: **20.12.2023**
(45) Mention of the grant of the patent: 01.07.2020
(21) Application number: 17173437.9
(22) Date of filing: 01.06.2015
(51) Int. Cl.: C09K 5/04

(54) **COMPOSITION COMPRISING HFC AND HFO**
ZUSAMMENSETZUNG MIT HFC UND HFO
COMPOSITION COMPRENANT HFC ET HFO

(30) Priority: 25.09.2014 JP 2014195670
(43) Date of publication of application: 01.11.2017
(62) Divisional of application: 15788311.7
(73) Proprietor: Daikin Industries, Ltd., Osaka 530-8323 (JP)
(72) Inventor: Shibanuma, Takashi, Osaka, 530-8323 (JP)
(74) Representative: Hoffmann Eitle

(56) References cited:
- EP-A1- 2 028 172
- WO-A1-01/83411
- WO-A1-97/03936
- WO-A1-99/07660
- WO-A1-2011/163117
- WO-A1-2013/192069
- WO-A1-2014/102479
- WO-A1-2015/054110
- WO-A1-2015/077134
- WO-A2-2007/126414
- WO-A2-2010/059677
- FR-A1- 3 000 096
- US-A- 5 470 442
- US-A- 5 877 360
- US-A1- 2003 010 618
- US-A1- 2003 157 009
- US-A1- 2010 181 186
- US-A1- 2011 152 585
- US-A1- 2012 065 437
- US-A1- 2013 186 115
- US-B2- 9 574 123
- Excerpt from Appendix D to AHRI Standard 700, cover page and pages 1, 9. 17 and 18
- Final report of a study titled "An Inhalation Prenatal Developmental Toxicity Study of HF0-1234yf (2,3,3,3-Tetrafluoropropene) in Rabbits"
- Printout from the Environmental Protection Agency (EPA) website under the docket ID EPA-HQ-QAR-2008-0664-0041
- AHRI Standard 700-2012
- US 61/908,276 (priority application of 012)
- US 61/889,077 (first priority application of 013)
- K Kawahara et al., "Tribological Evaluation of Rotary Compressor with HFC Refrigerants" (1996) International Compressor Engineering Conference, Paper 1141
- G. D. Short et al "Refrigeration Lubricants - Current Practice and Future Development" (1996), International Refrigeration and Air Conditioning Conference Paper 335
- S -0 Oh et al., Tribology Transactions 2004, vol 47, pp 29-33
- B. Davis et al. "Tribological Evaluation of Contacts Lubricated by Oil-Refrigerant Mixtures" (1992), International Compressor Engineering Conference Paper 838
- M. W Akram et al., Tribology International 2013, vol. 57, pp 92-100
- Decision of the United States Court of Appeals for the Federal Circuit Re US 9,574,123 B2
- Declaration by Prof. Dr. Polycarpou
- DSC Session 18/5 report
- Annex C Controlled substances Ozone Secretariat
- Annex A Controlled substances Ozone Secretariat
- GHS (Rev. 5) (2013), Chapter 4.2 of "Part 4 Environmental hazards"

## Description

### Technical Field

The present invention relates to a composition comprising HFC and HFO. HFC denotes hydrofluorocarbon, and HFO denotes hydrofluoroolefin.

### Background Art

Amid worldwide discussion about global warming as a highly serious issue, the development of environmentally preferable refrigeration and air conditioning equipment have become increasingly important. Refrigerants have an impact on warming, and are greatly involved in the performance of refrigeration and air conditioning equipment; therefore, they play an important role in techniques to reduce emissions of carbon dioxide, which affects to warming.

In recent years, there have been various proposals for partially fluorinated propene (HFO) having a double bond in the molecule, which has lower global-warming potential (GWP) than conventionally known CFC (chlorofluorocarbon), HCFC (hydrochlorofluorocarbon), and HFC.

Known examples of HFO include HFO-1234yf (2,3,3,3-tetrafluoropropene) and HFO-1234ze (E- or Z-1,3,3,3-tetrafluoropropene).

These substances are used singly or in the form of a composition (mixture) for various applications. As such compositions, for example, compositions comprising a mixture of HFC and HFO are known, as described in the following documents.

WO2010/002020 (JP2011-525205A) discloses a refrigerant composition comprising 36-50 mass-% of 1,1,1,2-tetrafluoroethane (HFC-134a) and 50-64 mass-% of 2,3,3,3-tetrafluoropropene (HFO-1234yf).

WO2011/093521 (JP2013-501820A) discloses a refrigerant composition comprising 30-50 mass-% of difluoromethane (HFC-32) and 70-50 mass-% of 2,3,3,3-tetrafluoropropene (HFO-1234yf).

WO2010/002014 (JP2011-525204A) discloses a refrigerant composition comprising difluoromethane (HFC-32), pentafluoroethane (HFC-125), and 2,3,3,3-tetrafluoropropene (HFO-1234yf), wherein the ratio of HFC-32/HFC-125/HFO-1234yf is in a range surrounded by points (0/21/79 mass-%), (16.6/25.3/58.1 mass-%), and (0/28.4/71.6 mass-%) in a ternary diagram of the refrigerant composition, and the composition essentially comprises HFC-32.

WO2012/151238 (JP2014-514423A) discloses a heat transfer composition comprising (a) 20-30 wt.-% of HFC-32, (b) 20-30 wt.-% of HFC-125, (c) 0-15 wt.-% of HFO-1234yf and 10-30 wt.-% of HFO-1234ze, and (d) 15-30 wt.-% of HFC-134a, with the wt.-% being based on the total of the components (a) to (d) in the composition.

US-A-2013/186115 discloses a refrigeration system comprising HCFC-22 and a lubricant, and further a refrigerant composition which can be used as a partial or full replacement of the HCFC-22 in this system. Among others, it discloses the at least partial removal of HCFC-22 and replacement thereof by a heat transfer composition comprising (a) HFC-32, (b) HFO-1234ze and (c) HFC-152a and/or HFC-134a.

US-A-2012/065437 in general relates to a method for producing 1234yf and especially for the production thereof at high purity. Among a variety of impurity compounds are listed which include 3,3,3-trifluoropropyne.

FR-A-3 000 096 generically discloses compositions comprising 1234yf and at least one further composition elected from a broader variety of alternatives including, among others, HFC-125, HCC-40 and CFC-115. Specific compositions described include those containing HFO-1234yf and HCC-40 or CFC-115.

WO 2010/059677 describes tetrafluoropropene compositions, and especially composition comprising HFO-1234yf or HFO-1234ze in combination with one or more HFC compound, wherein the HFC compounds include HFC-32, HFC-125, HFC-134a and HFC-152.

WO 2011/163117 describes heat transfer compositions comprising 2,3,3,3-tetrafluoropropene, difluoromethane, pentafluoroethane, and 1,1,1,2-tetrafluoroethane for use in refrigeration, air-conditioning, heat pump systems, and other heat transfer applications.

WO 2007/126414 relates to compositions for use in refrigeration, air-conditioning, and heat pump systems, which compositions comprise a fluoroolefin and at least one other component, including compositions comprising HFO-1234yf in combination with HFC-32 and/or HFC-134a.

Although CFC and HCFC have lubrication performance, the lubrication performance of a composition comprising a mixture of HFC and HFO is lower than those of CFC and/or HCFC. In particular, when such a composition is used as a refrigerant composition, the lubrication performance as a whole is generally ensured by using a lubricating oil (refrigerant oil) in combination. In this respect, it is desirable to improve the lubrication performance of the composition comprising a mixture of HFC and HFO before a lubricating oil is used in combination. This improvement has become an issue.

WO 2012/151238 discloses compositions comprising HFO-1234yf, HFO-1234ze, HFC-32, HFC-125 and HFC-134a.

### Summary of Invention

### Technical Problem

An object of the present invention is to provide a composition comprising a mixture of HFC and HFO, and having improved lubrication performance.

### Solution to Problem

The present inventor conducted extensive research to achieve the above object, and consequently found that the above object can be achieved by a composition comprising HFC and HFO, and further comprising a specific third component. Thus, the present invention has been completed.

That is, the present invention relates to a composition comprising:
(1) HFC-32, HFC-125, HFC-134a and HFC-134;
(2) HFO-1234yf and HFO-1234ze; and
(3) HCC-40, HCFC-22, HCFC-124, CFC-115, HCFC-1122, CFC-1113 and 3,3,3-trifluoropropyne.
wherein the total amount of (1) and (2) is ≥ 95 mass%, based on the total amount of (1)-(3).

### Advantageous Effects of Invention

The compositions of the present invention have improved lubrication performance because they comprise HFC and HFO, and further comprise a specific third component (specific chlorine-containing substances and 3,3,3-trifluoropropyne, i.e., HCFC-1122, HCFC-124, CFC-1113, HCC-40, HCFC-22, CFC-115 and 3,3,3-trifluoropropyne). The compositions of the present invention are useful as refrigerant compositions, for example.

### Brief Description of Drawing

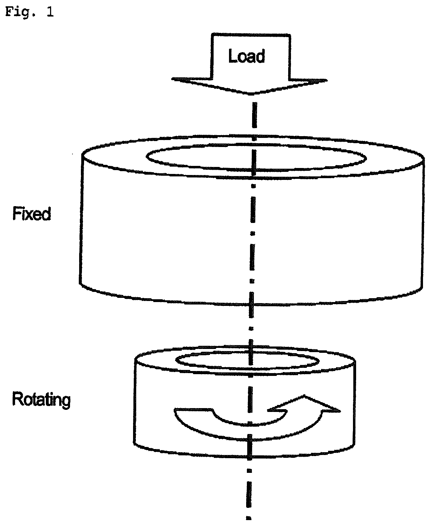

Fig. 1 is a schematic view of a thrust-type friction and abrasion tester (pin-on-disk type) used in an abrasion test in the Examples and Comparative Examples.

### Description of Embodiments

The compositions of the present invention comprise HFC and HFO, and further comprise a specific third component (specific chlorine-containing substances and 3,3,3-trifluoropropyne, i.e., HCFC-1122, HCFC-124, CFC-1113, HCC-40, HCFC-22, CFC-115 and 3,3,3-trifluoropropyne). The components constituting the composition of the present invention are defined in Table 1.

**Table 1**

| Code | Structure | Chemical Name |
|---|---|---|
| HFC-134a | CF₃CH₂F | 1,1,1,2-tetrafluoroethane |
| HFC-134 | CF₂HCF₂H | 1,1,2,2-tetrafluoroethane |
| HFC-32 | CH₂F₂ | Difluoromethane |
| HFC-125 | C₂HF₅ | Pentafluoroethane |
| HFO-1234yf | CF₃CF=CH₂ | 2,3,3,3-tetrafluoropropene |
| HFO-1234ze | CF₃CH=CHF | E- or Z-1,3,3,3-tetrafluoropropene |
| HCFC-1122 | CF₂=CHCl | 2,2-difluoro-1-chloroethylene |
| HCFC-124 | CF₃CFClH | 1,1,1,2-tetrafluoroethane |
| HCC-40 | CH₃Cl | Chloromethane |
| CFC-1113 | CF₂=CClF | Chlorotrifluoroethylene |
| HCFC-22 | CHF₂Cl | Chlorodifluoromethane |
| CFC-115 | CF₂ClCF₃ | Chloropentafluoroethane |
| - | CF₃C≡CH | 3,3,3-trifluoropropyne |

The composition of the present invention comprises HFC and HFO, wherein the composition comprises:
(1)HFC-32, HFC-125, HFC-134a and HFC-134 as the HFC;
(2) HFO-1234yf and HFO-1234ze as the HFO; and
(3) HCC-40, HCFC-22, HCFC-124, CFC-115, HCFC-1122, CFC-1113 and 3,3,3-trifluoropropyne as a third component.

Compared with a composition comprising only a combination of HFC and HFO mentioned above, the composition of the invention has improved lubrication performance because it comprises, in addition to the combination of HFC and HFO mentioned above, HCC-40, HCFC-22, HCFC-124, CFC-115, HCFC-1122, CFC-1113 and 3,3,3-trifluoropropyne as a third component.

In the present invention, HFO-1234yf and HFO-1234ze are used mixed at any ratio for use. It is preferable that the HFO-1234yf content is 1-99 mass%, and the HFO-1234ze content is 99-1 mass%, when the total amount of the HFOs is 100 mass%.

In the present invention, the third component includes HCC-40, HCFC-22, HCFC-124, CFC-115, HCFC-1122, and CFC-1113 and 3,3,3-trifluoropropyne. The content of each of these third components is not limited; however, among the third components, the CFC-1113 and CFC-115 contents are preferably higher. When a composition comprising HCC-40 is used as a refrigerant composition, HCC-40 may react with aluminum, which is assumed to be used as a piping material of a refrigerator, and thereby produce an explosive substance. Therefore, when HCC-40 is contained, its content is preferably ≤ 1 mass% when the total amount of the HFC, the HFO, and the third component (HCC-40, HCFC-22, HCFC-124, CFC-115, HCFC-1122, CFC-1113 and 3,3,3-trifluoropropyne) is 100 mass%.

In the present invention, the total amount of HFC and HFO is ≥ 95 mass% when the total amount of the HFC, the HFO, and the third component (HCC-40, HCFC-22, HCFC-124, CFC-115, HCFC-1122, CFC-1113 and 3,3,3-trifluoropropyne) is 100 mass%. In other words, the content of the third component is < 5 mass%. Although the lubrication performance is maintained even when the content of the third component is ≥ 5 mass%, < 5 mass% is preferred in order to maintain the properties of the mixture composition of HFC and HFO.

The compositions of the present invention have improved lubrication performance because they comprise HFC and HFO, and further comprise a specific third component (specific chlorine-containing substances and 3,3,3-trifluoropropyne, i.e., HCFC-1122, HCFC-124, CFC-1113, HCC-40, HCFC-22, CFC-115 and 3,3,3-trifluoropropyne).

The present compositions can be used for various applications, such as refrigerant compositions, aerosol propellants, foaming agents, blowing agents, solvents, cleaning agents, dispersion media, displacement drying agents, buffing abrasive agents, polymerization media, swelling agents, and fire suppression agents.

Among these applications, the present compositions can be particularly suitably used as refrigerant compositions because they have improved lubrication performance. For example, the present compositions can be suitably used in various refrigerators, such as car air conditioners, vending machine refrigerators, commercial and home air conditioners, gas heat pumps (GHPs), and electrical heat pumps (EHPs) . When used as a refrigerant composition, the composition of the present invention may further contain a refrigerant oil, if necessary. The refrigerant oil content, when used, is preferably set within the range of 10-50 mass-% of the refrigerant composition.

### Examples

The present invention is described in detail below with reference to a Reference Example and Comparative Example. However, the present invention is not limited thereto.

In the Reference Example and the Comparative Example, the lubrication performance of each composition was evaluated from the results of an abrasion test and a baking test. The methods of the abrasion test and the baking test are as described below.

### Abrasion test

Using a thrust-type friction and abrasion tester (pin-on-disk type: see Fig. 1), abrasion loss was measured by the abrasion test using each composition.

### Baking test

Baking load was measured by the baking test using each composition, in which a rod (shaft material) was pressed to a rotating disk (bearing material) while applying a load. The baking load was evaluated as a relative value when the baking load in the Comparative Example was regarded as 100.

### _ Reference Example and Comparative Example

The compositions of the Reference Example and the Comparative Example were prepared according to the formulations shown in Table 2.

**Table 2**

| | Reference Example | Comparative Example |
|---|---|---|
| HFC-32 (25 mass%) | 99.5 mass% | 100 mass% |
| HFC-125 (25 mass%) | | |
| HFC-134a + HFC-134 (10 mass%) | | |
| HFO-1234ze (39.5 mass%) | | |
| HCC-40 (0.05 mass%) | 0.5 mass% | - |
| HCFC-1122 (0.05 mass%) | | |
| HCFC-22 (0.05 mass%) | | |
| HCFC-124 (0.05 mass%) | | |
| CFC-1113 (0.05 mass%) | | |
| CFC-115 (0.25 mass%) | | |

Table 3 below shows the test results.

**Table 3**

| | Reference Example | Comparative Example |
|---|---|---|
| Abrasion test (abrasion loss) | 4.0 µm | 4.3 µm |
| Baking test (load) | 107 | 100 |

The results of Table 3 revealed that the lubrication performance was improved by adding a third component.

## Claims

1. A composition comprising:
(1) HFO-1234yf and HFO-1234ze;
(2) HFC-32, HFC-125, HFC-134a, and HFC-134; and
(3) HCC-40, HCFC-22, HCFC-124, CFC-115, HCFC-1122, CFC-1113, and 3,3,3-trifluoropropyne,
wherein the total amount of (1) and (2) is ≥ 95 mass%, based on the total amount of (1)-(3).

2. The composition of claim 1, which is a refrigerant composition.

3. The composition of claim 1 or 2, which further comprises a refrigerant oil in an amount of 10-50 mass% in the composition.

4. The composition of any of claims 1-3, which contains ≤ 1 mass% HCC-40, based on the total amount of (1)-(3).

5. Use of a composition as defined in any of claims 1-4 as a refrigerant composition.

## Patentansprüche

1. Zusammensetzung, umfassend:
(1) HFO-1234yf und HFO-1234ze;
(2) HFC-32, HFC-125, HFC-134a und HFC-134; und
(3) HCC-40, HCFC-22, HCFC-124, CFC-115, HCFC-1122, CFC-1113 und 3,3,3-Trifluorpropin,
wobei die Gesamtmenge von (1) und (2) ≥ 95 Massen-%, bezogen auf die Gesamtmenge von (1)-(3), ist.

2. Zusammensetzung gemäß Anspruch 1, die eine Kältemittelzusammensetzung ist.

3. Zusammensetzung gemäß Anspruch 1 oder 2, die ferner ein Kältemittelöl in einer Menge von 10 bis 50 Massen-% in der Zusammensetzung umfasst.

4. Zusammensetzung gemäß einem der Ansprüche 1-3, die ≤ 1 Massen-% HCC-40, bezogen auf die Gesamtmenge von (1)-(3), enthält.

5. Verwendung einer Zusammensetzung, wie in einem der Ansprüche 1-4 definiert, als Kältemittelzusammensetzung.

## Revendications

1. Composition comprenant :
(1) HFO-1234yf et HFO-1234ze ;
(2) HFC-32, HFC-125, HFC-134a, et HFC-134; et
(3) HCC-40, HCFC-22, HCFC-124, CFC-115, HCFC-1122, CFC-1113, et du 3,3,3-trifluoropropyne,
dans laquelle la quantité totale de (1) et (2) est ≥ 95 % en masse, sur la base de la quantité totale de (1)-(3).

2. Composition selon la revendication 1, qui est une composition réfrigérante.

3. Composition selon la revendication 1 ou 2, qui comprend en outre une huile réfrigérante en une quantité de 10-50 % en masse dans la composition.

4. Composition selon l'une quelconque des revendications 1-3, qui contient ≤ 1 % en masse de HCC-40, sur la base de la quantité totale de (1)-(3).

5. Utilisation d'une composition telle que définie dans l'une quelconque des revendications 1-4 en tant que composition réfrigérante.
